(19) Europäisches Patentamt / European Patent Office / Office européen des brevets

(11) **EP 4 458 873 A1**

(12) **EUROPEAN PATENT APPLICATION**
published in accordance with Art. 153(4) EPC

(43) Date of publication:
**06.11.2024 Bulletin 2024/45**

(21) Application number: **22915923.1**

(22) Date of filing: **22.12.2022**

(51) International Patent Classification (IPC):
**C08F 216/06** (2006.01)     **C08F 8/12** (2006.01)
**C08F 210/00** (2006.01)

(52) Cooperative Patent Classification (CPC):
**C08F 8/12; C08F 210/00; C08F 216/06**

(86) International application number:
**PCT/JP2022/047468**

(87) International publication number:
**WO 2023/127700 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021   JP 2021213444**
**28.06.2022   JP 2022103646**

(71) Applicant: **Kuraray Co., Ltd.**
**Kurashiki-shi, Okayama 710-0801 (JP)**

(72) Inventors:
• **BABA, Masahiro**
  **Kurashiki-shi, Okayama 710-0801 (JP)**
• **AKUTAGAWA, Shinnosuke**
  **Kurashiki-shi, Okayama 710-0801 (JP)**
• **UEYAMA, Shingo**
  **Kurashiki-shi, Okayama 710-0801 (JP)**
• **KONISHI, Hiroyuki**
  **Kurashiki-shi, Okayama 710-0801 (JP)**

(74) Representative: **Müller-Boré & Partner**
**Patentanwälte PartG mbB**
**Friedenheimer Brücke 21**
**80639 München (DE)**

(54) **VINYL ALCOHOL COPOLYMER, RESIN COMPOSITION CONTAINING SAME, AND RESIN MOLDED BODY**

(57)     A vinyl alcohol copolymer according to the present invention includes a vinyl alcohol constituent unit and an olefin constituent unit vinyl alcohol having 3 to 30 carbon atoms. The copolymer according to the present invention satisfies at least one of a difference between a melting point and a lowest heat-sealing temperature is 45°C or more; and the lowest heat-sealing temperature is 80°C or less, and satisfies predetermined relational formulas based on intensities and the number average molecular weight obtained from a UV absorption detector and a refractive index detector in gel permeation chromatography measurement performed on the copolymer.

EP 4 458 873 A1

## Description

Technical Field

The present invention relates to a vinyl alcohol copolymer, a resin composition containing the same, and a resin molded body.

Background Art

Vinyl alcohol-based polymers (hereinafter may be abbreviated as "PVAs") are among a few hydrophilic polymers having crystallinity. PVAs are widely used in emulsifiers, suspending agents, surfactants, fiber finishing agents, various binders, paper finishing agents, adhesives, films, etc., owing to their excellent water solubility and film properties (strength, oil resistance, film forming properties, oxygen gas barrier properties, etc.).

PVAs have high crystallinity and therefore have poor processability. It is known that a PVA whose crystallinity is reduced has improved processability, and a PVA whose crystallinity is reduced by reducing the degree of saponification is manufactured and sold, for example. However, it is pointed out that when the degree of saponification of a PVA is reduced, the oxygen gas barrier properties, mechanical properties, and thermal stability, which are intrinsic to the PVA, deteriorate. For these reasons, it is difficult to realize high processability and high performance at the same time.

For example, Patent Document 1 describes a PVA containing ethylene in an amount of 2 to 19 mol% and having excellent thermal stability, water resistance, gas barrier properties, water vapor barrier properties, and stability of an aqueous solution that is left to stand at low temperature.

Patent Document 2 describes a PVA containing an olefin having 3 or 4 carbon atoms, and Patent Document 3 describes a PVA containing an olefin having 4 or less carbon atoms. According to Patent Documents 2 and 3, these PVAs can be subjected to melt molding.

However, it was found that the PVA described in Patent Document 1 has poor secondary processability. The PVAs described in Patent Documents 2 and 3 also do not have sufficient secondary processability, and there is no disclosure about a correlation between secondary processability and a manufacturing method. Specifically, even if these PVAs are formed into films through melt molding, it may be difficult to actually use those films because secondary processability, such as heat-sealing properties, is insufficient.

Related Art Documents

Patent Documents

Patent Document 1: JP 4772175B2
Patent Document 2: JP S49-032657A
Patent Document 3: WO 2006/011490

Summary of Invention

Problem to be Solved by the Invention

The present invention was made to solve the above-described problems, and it is an object thereof to provide a vinyl alcohol copolymer, a resin composition containing the same, and a resin molded body, which have excellent secondary processability while maintaining the mechanical properties possessed by PVA.

Means for Solving the Problem

The present invention encompasses the following invention.

[1] A vinyl alcohol copolymer comprising a vinyl alcohol constituent unit and an olefin constituent unit having 3 to 30 carbon atoms, the vinyl alcohol copolymer satisfying at least one of

a difference between a melting point and a lowest heat-sealing temperature is 45°C or more; and
the lowest heat-sealing temperature is 80°C or less, and

the vinyl alcohol copolymer also satisfying the following formula:

$$\{U1/R1\}/\{U2/R2\} \le 0.990$$

or

$$1.010 \le \{U1/R1\}/\{U2/R2\}$$

where

U1 represents a peak intensity value in a chromatogram obtained from a UV absorption detector at a molecular weight MU1 defined by the following formula when Mn is calculated from a chromatogram obtained from a refractive index detector in gel permeation chromatography measurement performed on a copolymer obtained by acetylating the vinyl alcohol copolymer.

$$Log_{10}MU1 = Log_{10}(Mn)+0.5$$

R1 represents a peak intensity value in the chromatogram obtained from the refractive index detector at a molecular weight MR1 defined by the following formula when Mn is calculated from the chromatogram obtained from the refractive index detector in the gel permeation chromatography measurement performed on the copolymer obtained by acetylating the vinyl alcohol copolymer.

$$Log_{10}MR1 = Log_{10}(Mn)+0.5$$

U2 represents a peak intensity value in the chromatogram obtained from the UV absorption detector at a molecular weight MU2 defined by the following formula when Mn is calculated from the chromatogram obtained from the refractive index detector in the gel permeation chromatography measurement performed on the copolymer obtained by acetylating the vinyl alcohol copolymer.

$$Log_{10}MU2 = Log_{10}(Mn)-0.5$$

R2 represents a peak intensity value in the chromatogram obtained from the refractive index detector at a molecular weight MR2 defined by the following formula when Mn is calculated from the chromatogram obtained from the refractive index detector in the gel permeation chromatography measurement performed on the copolymer obtained by acetylating the vinyl alcohol copolymer.

$$Log_{10}MR2 = Log_{10}(Mn)-0.5,$$

and
And Mn represents a number average molecular weight of the copolymer obtained by acetylating the vinyl alcohol copolymer, which is calculated from the chromatogram obtained from the refractive index detector.

[2] The vinyl alcohol copolymer according to [1], wherein the olefin constituent unit has 3 to 9 carbon atoms.

[3] The vinyl alcohol copolymer according to [2], wherein the olefin constituent unit is at least one constituent unit selected from the group consisting of a propylene unit, a 1-butene unit, a cis-2-butene unit, a trans-2-butene unit, a 2-methylpropylene unit, a 1-pentene unit, a cis-2-pentene unit, a trans-2-pentene unit, a 2-methyl-1-butene unit, a 2-methyl-2-butene unit, a 3-methyl-1-butene unit, a 1-hexene unit, a 1-heptene unit, a 1-octene unit, a 1-nonene unit, a 2-methyl-1-octene unit, and a 7-methyl-1-octene unit.

[4] The vinyl alcohol copolymer according to [3], wherein the olefin constituent unit is at least one constituent unit selected from the group consisting of a propylene unit, a 1-butene unit, a cis-2-butene unit, a trans-2-butene unit, and a 2-methylpropylene unit.

[5] The vinyl alcohol copolymer according to [4], wherein the olefin constituent unit is a propylene unit.

[6] The vinyl alcohol copolymer according to [4], wherein the olefin constituent unit is a 2-methylpropylene unit.

[7] The vinyl alcohol copolymer according to any one of [1] to [6], wherein a content of the olefin constituent unit is 0.1 to 60 mol%.

[8] The vinyl alcohol copolymer according to any one of [1] to [7], wherein the number average molecular weight (Mn) of the copolymer obtained by acetylating the vinyl alcohol copolymer is 400 to 200000.

[9] The vinyl alcohol copolymer according to any one of [1] to [8], wherein the vinyl alcohol polymer has a degree of saponification of 50 to 100 mol%.

[10] The vinyl alcohol copolymer according to any one of [1] to [9], wherein a content of the vinyl alcohol constituent unit is 75 to 99 mol%.

[11] The vinyl alcohol copolymer according to any one of [1] to [10], further comprising a constituent unit containing a hydroxyl group, other than the vinyl alcohol constituent unit.

[12] The vinyl alcohol copolymer according to any one of [1] to [11], further comprising an ethylene constituent unit.

[13] A resin composition comprising the vinyl alcohol copolymer according to any one of [1] to [12].

[14] The resin composition according to [13], further comprising at least one polymer selected from the group consisting of a polyvinyl alcohol having a degree of saponification of 40 to 100%, a modified polyvinyl alcohol having a degree of saponification of 40 to 100%, an ethylene-vinyl alcohol copolymer having a degree of saponification of 40 to 100%, a polyvinyl butyral having a degree of saponification of 40 to 100%, starch, a starch derivative, cellulose, and a cellulose derivative.

[15] A resin molded body comprising the resin composition according to [13] or [14].

[16] The resin molded body according to [16], which is a film.

[17] The resin molded body according to [15], which is a fiber.

[18] The resin molded body according to [15], which is a gas barrier material.

[19] The resin molded body according to [15], which is a polarizing film.

[20] The resin molded body according to [16], which is a water-soluble substrate.

[21] A method for manufacturing a vinyl alcohol copolymer including a vinyl alcohol constituent unit and an olefin constituent unit having 3 to 30 carbon atoms, and satisfying at least one of a difference between a melting point and a lowest heat-sealing temperature is 45°C or more; and the lowest heat-sealing temperature is 80°C or less, comprising:

obtaining a crude copolymer by polymerizing an olefin and vinyl acetate under conditions where a pressure of the olefin changes; and
saponifying the crude copolymer.

[22] The method for manufacturing a vinyl alcohol copolymer according to [21], wherein an average change rate of the pressure of the olefin is $1.0 \times 10^{-5}$ Pa\min or more.

Effects of the Invention

According to the present invention, it is possible to obtain a resin molded body that has both good mechanical properties and excellent secondary processability. Owing to these properties, the resin molded body according to the present invention can be used in various applications such as a film, fiber, and a water-soluble substrate.

Description of Embodiments

Vinyl Alcohol Copolymer

A vinyl alcohol copolymer according to the present invention includes a vinyl alcohol constituent unit and an olefin constituent unit.

Vinyl Alcohol Constituent Unit

The vinyl alcohol constituent unit is a repeating unit and obtained by polymerizing a vinyl ester and performing saponification, for example. There is no particular limitation on the vinyl ester, and examples thereof include vinyl acetate, vinyl propionate, vinyl butyrate, vinyl valerate, vinyl stearate, vinyl benzoate, vinyl trifluoroacetate, vinyl formate, vinyl isobutyrate, vinyl isovalerate, vinyl pivalate, vinyl caproate, vinyl enanthate, vinyl caprylate, vinyl pelargonate, vinyl caprate, vinyl lactate, vinyl tropate, vinyl cyclohexanoate, vinyl benzoate, vinyl salicylate, vinyl anisate, vinyl vanillate, vinyl gallate, vinyl versatate, and combinations thereof. Vinyl acetate is preferable because of its high versatility and availability.

The content of the above-described vinyl alcohol constituent unit in the vinyl alcohol copolymer according to the present invention is preferably 40 mol% to 99.9 mol%, more preferably 75 mol% to 99 mol%, and further preferably 80 mol% to 95 mol%. When the content of the vinyl alcohol constituent unit is lower than 40 mol%, the strength may decrease, and when the content of the vinyl alcohol constituent unit is higher than 99.9 mol%, secondary processability such as heat-sealing properties may deteriorate.

Olefin Constituent Unit

The olefin constituent unit is a unit that can be obtained through polymerization of a suitable olefin such as $\alpha$-olefin or $\beta$-olefin, and has 3 to 30 carbon atoms, more preferably 3 to 9 carbon atoms, and further preferably 3 to 5 carbon atoms.

An olefin constituent unit that may be included in the vinyl alcohol copolymer according to the present invention is preferably a constituent unit derived from an ethylenic unsaturated monomer. Examples of the olefin constituent unit derived from an ethylenic unsaturated monomer include constituent units derived from propylene, 1-butene, cis-2-butene, trans-2-butene, 2-methylpropylene (2-methylpropene), 1-pentene, cis-2-pentene, trans-2-pentene, 2-methyl-1-butene, 2-methyl-2-butene, and 3-methyl-1-butene, 1-octene, 1-decene, 1-dodecen, 1-tetradecen, 1-hexadecen, and 1-octadecen, and combinations thereof. In particular, constituent units derived from propylene, 1-butene, cis-2-butene, trans-2-butene, and 2-methylpropylene, and combinations thereof are preferably used as the olefin constituent unit because of their good separability from other monomers after copolymerization, and a constituent unit derived from propylene is more preferably used from the viewpoint of ease of purification and separation after the polymerization reaction. On the other hand, 2-methylpropylene is preferable from the viewpoint of obtaining a vinyl alcohol copolymer that is excellent in secondary processability such as the heat-sealing properties.

The content of the above-described olefin constituent unit in the vinyl alcohol copolymer according to the present invention is preferably 0.1 mol% to 60 mol%, more preferably 1 mol% to 30 mol%, further preferably 3 mol% to 20 mol%, and most preferably 5 mol% to 15 mol%. When the content of the olefin constituent unit is lower than 0.1 mol%, secondary processability such as the heat-sealing properties may deteriorate. When the content of the olefin constituent unit is higher than 60 mol%, the molecular weight may decrease, leading to a reduction in the strength.

Constituent Unit Containing Hydroxyl Group Other Than Vinyl Alcohol Constituent Unit

The vinyl alcohol copolymer according to the present invention may also include, other than the above-described vinyl alcohol constituent unit, a constituent unit that contains a hydroxyl group and is copolymerizable with the vinyl alcohol constituent unit and the olefin constituent unit, as long as effects of the present invention are not hindered. The constituent unit containing a hydroxyl group, other than the vinyl alcohol constituent unit, contains a hydroxyl group or a functional group that can be derivatized to a hydroxyl group. There is no particular limitation on the functional group that can be derivatized to a hydroxyl group, and examples thereof include an ester group, an amide group, an ether group, and an acetal group, and an ester group is preferable from the viewpoint of facilitating production of the vinyl alcohol copolymer itself. Examples of the constituent unit containing a hydroxyl group other than the vinyl alcohol constituent unit include constituent units derived from 1,3-diacetoxy-2-methylenepropane (DAMP), 1,3-dipropionyloxy-2-methylenepropane, 1,3-dibutylonyloxy-2-methylenepropane, 1,3-dihydroxy-2-methylenepropane, allyl alcohol, 3-acetoxy-1-propene, 3,4-dihydroxy-1-butene, 3,4-diacetoxy-1-butene, 4-hydroxy-2-methyl-1-butene, 4-acetoxy-2-methyl-1-butene, methallyl alcohol, and methallyl acetate, and combinations thereof. A constituent unit derived from DAMP is preferable because this constituent unit facilitates polymerization in which it is used.

The content of the constituent unit containing a hydroxyl group other than the vinyl alcohol constituent unit in the vinyl alcohol copolymer according to the present invention is preferably 0.1 mol% to 40 mol%, more preferably 1 mol% to 20 mol%, and further preferably 5 mol% to 15 mol%. When the content of the constituent unit containing a hydroxyl group other than the vinyl alcohol constituent unit is lower than 0.1 mol%, water solubility of the vinyl alcohol copolymer to be obtained may deteriorate. When the content of the constituent unit containing a hydroxyl group is higher than 40 mol%, the molecular weight of the vinyl alcohol copolymer to be obtained may decrease, leading to a reduction in the strength.

Ethylene Constituent Unit

The vinyl alcohol copolymer according to the present invention may also include an ethylene constituent unit that is copolymerizable with the vinyl alcohol constituent unit and the olefin constituent unit described above, as long as the effects of the present invention are not hindered. The content of the ethylene constituent unit in the vinyl alcohol copolymer according to the present invention is preferably 0.1 mol% to 60 mol%, more preferably 1 mol% to 50 mol%, further preferably 5 mol% to 40 mol%, and most preferably 7 mol% to 20 mol%. When the content of the ethylene constituent unit is lower than 0.1 mol%, stability of the viscosity of an aqueous solution may decrease. When the content of the ethylene constituent unit is higher than 60 mol%, the strength of the vinyl alcohol copolymer to be obtained may decrease.

Other Constituent Units

The vinyl alcohol copolymer according to the present invention may also include constituent units other than the above-described constituent units, as long as the effects of the present invention are not hindered. There is no particular limitation on the other constituent units, and examples thereof include constituent units derived from: acrylic acid; unsaturated monomers including acrylic esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid; unsaturated monomers including methacrylic esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamides such as acrylamide, N-methylacrylamide, N-ethylacrylamide, N,N-dimethylacrylamide, diacetone acrylamide, 2-acrylamido-2-methylpropane sulfonate, and acrylamidopropyl dimethylamine; methacrylamides such as methacrylamide, N-methylmethacrylamide, N-ethylmethacrylamide, methacrylamide propane sulfonate, and methacrylamidopropyl dimethylamine; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; unsaturated nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane, and allyl chloride; unsaturated dicarboxylic acids such as maleic acid, itaconic acid, and fumaric acid, and salts thereof unsaturated dicarboxylic acid esters such as monomethyl maleate, dimethyl maleate, methyl itaconate, dimethyl itaconate, methyl fumarate, and dimethyl fumarate, and salts thereof vinyl silyl compounds such as vinyltrimethoxysilane; isopropenyl acetate; vinylsulfonic acid; p-styrenesulfonic acid; ammonium salts such as diallyldimethylammonium chloride, vinyltrimethylammonium chloride, allyltrimethylammonium chloride, p-vinylbenzyl trimethylammonium chloride, and 3-(methacrylamide)propyl trimethylammonium chloride; and vinyl esters such as vinyl acetate, vinyl propionate, vinyl butyrate, vinyl valerate, vinyl stearate, vinyl benzoate, vinyl trifluoroacetate, vinyl pivalate, and vinyl versatate; and combinations thereof.

The content of the other constituent units in the vinyl alcohol copolymer according to the present invention is preferably 40 mol% or less, more preferably 10 mol% or less, and further preferably 5 mol% or less. When the content of the constituent unit containing a hydroxyl group is higher than 40 mol%, the strength may decrease.

Lowest Heat-Sealing Temperature

A difference between the melting point of the vinyl alcohol copolymer according to the present invention and a lowest heat-sealing temperature of the vinyl alcohol copolymer is 45°C or more, preferably 50°C or more, and more preferably 60°C or more, or the lowest heat-sealing temperature is 80°C or less, preferably 75°C or less, and more preferably 70°C or less. The term "lowest heat-sealing temperature" as used in the present specification refers to the lowest temperature among temperatures at which two films whose moisture content has been adjusted are subjected to heat-sealing performed in an environment at 23°C and 50% RH with use of a heat-sealing machine under conditions of an upper pressing part (10 mm), a lower pressing part (10 mm), a pressing force of about 0.6 MPa, and 1 second, and the obtained heat-sealed portion has a breaking strength or a peel strength of more than 5 N/15 mm with a width of 15 mm when the strength is measured in a T-peel test (180° peel test) at a test speed of 300 mm/min. When the difference between the melting point and the lowest heat-sealing temperature is less than 45°C, there may arise a concern that the vinyl alcohol copolymer (resin) to be obtained will melt and be cut when heat is applied and heat-sealing strength of a film formed from the copolymer will be insufficient, for example. Although there is no limitation on the lower limit of the lowest heat-sealing temperature, when the lowest heat-sealing temperature is lower than 40°C, films formed from the vinyl alcohol copolymer may adhere to each other while being stored.

Intensities Obtained from UV Absorption Detector and Refractive Index Detector in Gel Permeation Chromatography Measurement

The vinyl alcohol copolymer according to the present invention satisfies either of the following relational formulas with respect to intensities obtained from a UV detector and a refractive index detector in gel permeation chromatography measurement performed on a copolymer obtained by acetylating the vinyl alcohol copolymer.

$$\text{(a)} \quad \{U1/R1\}/\{U2/R2\} \leq 0.990$$

or

$$(b)\ 1.010 \le \{U1/R1\}/\{U2/R2\}$$

Here,

U1 represents a peak intensity value in a chromatogram obtained from the UV absorption detector at a molecular weight MU1 defined by the following formula when Mn is calculated from a chromatogram obtained from the refractive index detector in the gel permeation chromatography measurement performed on the copolymer obtained by acetylating the vinyl alcohol copolymer.

$$Log_{10}MU1 = Log_{10}(Mn) + 0.5$$

R1 represents a peak intensity value in the chromatogram obtained from the refractive index detector at a molecular weight MR1 defined by the following formula when Mn is calculated from the chromatogram obtained from the refractive index detector in the gel permeation chromatography measurement performed on the copolymer obtained by acetylating the vinyl alcohol copolymer.

$$Log_{10}MR1 = Log_{10}(Mn) + 0.5$$

U2 represents a peak intensity value in the chromatogram obtained from the UV absorption detector at a molecular weight MU2 defined by the following formula when Mn is calculated from the chromatogram obtained from the refractive index detector in the gel permeation chromatography measurement performed on the copolymer obtained by acetylating the vinyl alcohol copolymer.

$$Log_{10}MU2 = Log_{10}(Mn) - 0.5$$

R2 represents a peak intensity value in the chromatogram obtained from the refractive index detector at a molecular weight MR2 defined by the following formula when Mn is calculated from the chromatogram obtained from the refractive index detector in the gel permeation chromatography measurement performed on the copolymer obtained by acetylating the vinyl alcohol copolymer.

$$Log_{10}MR2 = Log_{10}(Mn) - 0.5$$

Mn is a number average molecular weight of the copolymer obtained by acetylating the vinyl alcohol copolymer, which is calculated from the chromatogram obtained from the refractive index detector.

Note that the upper limit value in the formula (a) shown above is preferably 0.985 or less, more preferably 0.980 or less, 0.975 or less, 0.970 or less, 0.950 or less, or 0.930 or less, and most preferably 0.910 or less. The lower limit value in the formula (b) shown above is preferably 1.013 or more, more preferably 1.018 or more, 1.025 or more, 1.030 or more, 1.050 or more, or 1.070 or more, and most preferably 1.100 or more.

When the vinyl alcohol copolymer according to the present invention satisfies the range of the formula (a) or (b), a film formed from the vinyl alcohol copolymer can have good heat-sealing properties.

Other Properties

The number average molecular weight (Mn) of the copolymer obtained by acetylating the vinyl alcohol copolymer according to the present invention is preferably 400 to 200000, more preferably 10000 to 150000, further preferably 15000 to 100000, and most preferably 20000 to 50000. When Mn of the copolymer obtained by acetylating the vinyl alcohol copolymer is less than 400, a film formed from the copolymer may not have sufficient strength, for example. When Mn of the vinyl alcohol copolymer is more than 200000, industrial production of the vinyl alcohol copolymer itself may become difficult or processability of the film may deteriorate. Note that Mn is calculated by performing high performance liquid chromatography (HPLC), for example.

The degree of saponification of the vinyl alcohol copolymer according to the present invention is not particularly limited, but is preferably 50 mol% to 100 mol%. When the degree of saponification is less than 50 mol%, a resin molded body obtained using the copolymer may not have sufficient water vapor barrier properties. The degree of saponification is more preferably 70 mol% or more, and further preferably 80 mol% or more. On the other hand, the degree of saponification is preferably 99.99 mol% or less, more preferably 99.95 mol% or less, and further preferably 99.90 mol% or less. In the present invention, the degree of saponification is defined as DS in the formula ($S_1$) shown below, and more specifically, is calculated from a measurement result of $^1$H-NMR.
[Formula 1]

$$DS = \frac{D}{E} \times 100 \qquad (S_1)$$

In the formula ($S_1$), D represents the number of moles of hydroxyl groups included in the vinyl alcohol copolymer and E represents a sum of the number of moles of hydroxyl groups included in the vinyl alcohol copolymer and the number of moles of ester groups included in the vinyl alcohol copolymer.

Method for Manufacturing Vinyl Alcohol Copolymer

The vinyl alcohol copolymer according to the present invention can be manufactured by polymerizing a vinyl ester monomer, an olefin monomer, and/or other monomers under conditions where the pressure of the olefin monomer changes, for example, although the vinyl alcohol copolymer does not necessarily need to be manufactured using this method. The following describes a method for manufacturing the vinyl alcohol copolymer according to the present invention by polymerizing a vinyl ester monomer, an olefin monomer, and/or other monomers under conditions where the pressure of the olefin monomer changes.

Polymerization

Polymerization of the vinyl ester monomer, the olefin monomer, and/or the other monomers may be performed using any of batch polymerization, semi-batch polymerization, continuous polymerization, and semi-continuous polymerization, but it is preferable to perform batch polymerization, for example, under conditions where the pressure of the olefin monomer changes.
Here, an average change rate of the pressure of the olefin constituent unit is $1.0 \times 10^{-5}$ Palmin or more, preferably $10.0 \times 10^{-5}$ Palmin or more, and more preferably $20.0 \times 10^{-5}$ Palmin or more, for example. When the average change rate of the pressure of the olefin constituent unit is lower than $1.0 \times 10^{-5}$ Palmin, the concentration of the olefin constituent unit in the reaction chamber may decrease and it may be difficult to obtain the desired vinyl alcohol copolymer. Note that the average change rate is the absolute value of a pressure change rate (which is expressed as a positive value when the pressure increases and expressed as a negative value when the pressure decreases). In a case where the pressure is changed a plurality of times, such as a case where the pressure is increased and reduced, while the copolymer is produced, the average of absolute values of pressure change rates of the respective changes is taken as the average change rate.
Also, it is possible to adopt a known polymerization method such as bulk polymerization, solution polymerization, suspension polymerization, or emulsion polymerization.
Although there is no particular limitation on the solvent used in the solution polymerization, an alcohol is preferably used, and a lower alcohol such as methanol, ethanol, or propanol is more preferably used, for example. The amount of the solvent used in a polymerization reaction solution can be selected with consideration given to the target viscosity-average polymerization degree of the vinyl alcohol copolymer or the chain transfer of the solvent, and the ratio (solvent/total monomers) of the mass of the solvent contained in the reaction solution to the total mass of monomers contained therein is selected preferably within a range from 0.01 to 10, and more preferably within a range from 0.05 to 3.
A known polymerization initiator can be used for copolymerization of the vinyl ester monomer and the olefin monomer, for example. The type of polymerization initiator to be used can be selected as appropriate according to the polymerization method described above. Examples of such a polymerization initiator include an azo initiator, a peroxide initiator, and a redox initiator.
Examples of the azo initiator include 2,2-azobisisobutyronitrile, 2,2-azobis(2,4-dimethylvaleronitrile), and 2,2-azobis(4-methoxy-2,4- dimethylvaleronitrile).
Examples of the peroxide initiator include: percarbonate compounds such as diisopropyl peroxydicarbonate, di-2-ethylhexyl peroxydicarbonate, and diethoxyethyl peroxydicarbonate; perester compounds such as t-butyl peroxyneodecanoate, α-cumyl peroxyneodecanoate, and acetyl peroxide; acetylcyclohexyl sulfonyl peroxide; and 2,4,4-trimethylpentyl-2-peroxyphenoxyacetate. When a peroxide initiator is used, it is possible to use potassium persulfate, ammonium persulfate, hydrogen peroxide, or the like in combination with the initiator.

Examples of the redox initiator include a combination of the above-described peroxide initiator and a reducing agent such as sodium hydrogen sulfite, sodium hydrogen carbonate, tartaric acid, L-ascorbic acid, or rongalite.

The amount of the polymerization initiator to be used varies depending on the type of polymerization catalyst used together with the initiator, and therefore is not necessarily limited, and can be adjusted by those skilled in the art according to the polymerization rate, for example. For example, the polymerization initiator is used in an amount of preferably 0.01 mol% to 0.2 mol%, and more preferably 0.02 mol% to 0.15 mol% with respect to the vinyl ester monomer described above. When the polymerization initiator is used in an amount within this range with respect to the vinyl ester monomer, the copolymerization of the vinyl ester monomer and the olefin monomer can be performed more efficiently. Although there is no particular limitation on the polymerization temperature, a temperature within a range from room temperature to about 150°C is appropriate, for example, and a temperature not lower than 40°C and not higher than the boiling point of a solvent to be used can be preferably selected.

In the manufacturing method according to the present invention, the above-described polymerization can be performed in the presence of a chain transfer agent, as long as the effects of the present invention are not hindered.

Examples of the chain transfer agent include: aldehydes such as acetaldehyde and propionaldehyde; ketones such as acetone and methyl ethyl ketone; mercaptans such as 2-hydroxyethane thiol; and phosphinates such as sodium phosphinate monohydrate. The amount of the chain transfer agent to be added to the polymerization reaction solution can be determined according to the chain transfer coefficient of the chain transfer agent and the target degree of polymerization of the vinyl alcohol copolymer, and is preferably 0.1 to 10 parts by mass per 100 parts by mass of the vinyl ester monomer described above.

A crude copolymer can be produced through the above-described polymerization.

In the manufacturing method according to the present invention, the crude copolymer obtained as described above may be saponified. At this time, all or some vinyl ester units derived from the vinyl ester monomer and included in the copolymer are converted to vinyl alcohol units. Different types of ester groups may be hydrolyzed at the same time in a single saponification reaction.

Such saponification can be performed using a known method. Saponification is commonly performed in a solution of an alcohol or hydrous alcohol. Examples of alcohols suitably used in the saponification include lower alcohols such as methanol and ethanol, for example, and methanol is preferably used. The alcohol or hydrous alcohol used in the saponification may contain another solvent such as acetone, methyl acetate, ethyl acetate, or benzene in an amount of 40 mass% or less with respect to the mass of the alcohol or hydrous alcohol. Examples of a catalyst used in the saponification include an alkali metal hydroxide such as potassium hydroxide or sodium hydroxide, an alkaline catalyst such as sodium methylate, and an acid catalyst such as mineral acid. In the saponification, the temperature is set to 20°C to 120°C, for example. When a gel precipitates as a product as the saponification progresses, the product may be pulverized and then washed and dried.

The vinyl alcohol copolymer according the present invention can be manufactured as described above.

Resin Composition

The vinyl alcohol copolymer according to the present invention can be used alone or as a resin composition obtained by mixing the vinyl alcohol copolymer with another copolymer and/or or additives.

Examples of the other copolymer include a polyvinyl alcohol or an ethylene-vinyl alcohol copolymer that does not include a constituent unit containing a hydroxyl group, other than the above-described vinyl alcohol constituent unit. More specific examples of the other copolymer include a polyvinyl alcohol having a degree of saponification of 40 to 100%, a modified polyvinyl alcohol having a degree of saponification of 40 to 100%, an ethylene-vinyl alcohol copolymer having a degree of saponification of 40 to 100%, polyvinyl butyral having a degree of saponification of 40 to 100%, starch, a starch derivative, cellulose, a cellulose derivative, and combinations thereof.

Examples of other additives include an inorganic salt, an organic salt, a crosslinking agent, a solvent, a UV absorbing agent, an antioxidant, an anti-static agent, a plasticizer, an antifungal agent, an antiseptic agent, and combinations thereof. There is no particular limitation on the content of the other copolymer and the content of the other additives, and appropriate amounts can be selected by those skilled in the art.

Resin Molded Body

A resin molded body according to the present invention is formed from a resin composition containing the vinyl alcohol copolymer described above. The resin composition can be formed into a packaging material (e.g., a film including a polarizing film), (binder) fiber, a polarizing film, a water-soluble substrate, or the like that can be used in applications such as heat-sealing, for example, by utilizing excellent gas barrier properties (e.g., oxygen gas barrier properties and water vapor barrier properties) and secondary processability of the vinyl alcohol copolymer.

For example, the resin molded body according to the present invention may be a film for heat-sealing.

When the resin molded body according to the present invention is used as a film for heat-sealing, the size and thickness of the film are not particularly limited, and can be set to a suitable size and a suitable thickness by those skilled in the art according to the intended use. Another thermoplastic resin film may be layered as a substrate layer on the film for heat-sealing according to the present invention.

Examples of the other thermoplastic resin film include a polyolefin film (e.g., a polyethylene film or a polypropylene film), a polyester film (e.g., a polyethylene terephthalate film), a nylon film, a polyacrylonitrile film, a polyvinyl chloride film, a polyvinylidene chloride (PVDC) film, and combinations thereof. The size and thickness of the other thermoplastic resin film are not particularly limited, and can be set to a suitable size and a suitable thickness by those skilled in the art according to the intended use.

The vinyl alcohol copolymer and/or the resin composition according to the present invention can be used for: a surfactant; a dispersion stabilizer for an organic or inorganic pigment in a coating material, an adhesive, etc.; a dispersion stabilizer and a dispersion aid for suspension polymerization of various vinyl compounds such as vinyl chloride, vinylidene chloride, styrene, (meth)acrylate, and vinyl acetate; a pressure-sensitive adhesive agent; various binders; additives for cement and mortar; paper modifiers such as a paper coating material, an internal additive for paper, and a pigment binder; a sizing agent; a fiber finishing agent; a leather finishing agent; a coating material; an antifogging agent; a metal corrosion inhibitor; a brightening agent for zinc plating; an anti-static agent; a medicine coating agent; an emulsifier for emulsion polymerization; a post-emulsification agent such as bitumen; a coagulant for a substance suspended or dissolved in water; a metal coagulant; water-soluble fiber for fiber, sheet, pipe, tube, anti-leakage film, and chemical lace; sponge; a water-soluble film; a polarizing film; a barrier film; a post-reaction application of a reaction with a low-molecular-weight organic compound, a high-molecular-weight organic compound, or an inorganic compound; an adhesive for wood, paper, aluminum foil, or an inorganic substance; a binder for nonwoven fabric; a warp sizing agent; a fiber finishing agent; a sizing agent for hydrophobic fiber such as polyester fiber; materials used in the fat and oil industries; materials used in the electrical and electronic fields; a film; a sheet; a bottle; a tube; packaging containers for foods, beverages, pet foods, medicines, health care goods, clothes, etc.; a fuel tank; an air conditioner pipe; a vacuum heat-insulation plate; construction materials; a soil fumigation film; a liner for filled ground; a thickener; a coagulant; a soil modifier; a hydrous gel; an intermediate film composition for laminated glass; a sealing agent for solar cells; a slurry composition for ceramics; an ink composition and a coating material composition; an adhesive composition; and a heat developing photosensitive material composition, for example.

Examples

The following describes the present invention in detail with reference to Examples, but the present invention is not limited to the following Examples. In the following Examples and Comparative Examples, "%" and "parts" are "% by mass" and "parts by mass", respectively, unless otherwise specified.

Calculation of Contents of Monomer Units

$^1$H-NMR of each of vinyl alcohol copolymers obtained in Examples 1 to 11 and Comparative Examples 1 to 4 was measured using a nuclear magnetic resonance apparatus "LAMBDA 500" manufactured by JEOL Ltd., in deuterated dimethyl sulfoxide at 27°C to determine contents of monomer units (an olefin constituent unit, a vinyl alcohol constituent unit, and constituent units containing a hydroxyl group other than the vinyl alcohol constituent unit) in the polymer.

Number Average Molecular Weight (Mn), $Log_{10}$(Mn), U1/R1, U2/R2

0.25 g of the obtained vinyl alcohol copolymer was dissolved in 2.25 g of dimethyl sulfoxide at 80°C. 0.0135 g of 4-dimethylaminopyridine and 0.65 g of pyridine were mixed, and the whole amount of the mixture was added little by little in drops to the dimethyl sulfoxide solution cooled to 25°C. 1.15 g of acetic anhydride was added to the solution little by little and dissolved therein to acetylate the copolymer by causing a reaction to occur at 25°C for 1 hour. After the reaction, the solution was added to a beaker containing 100 g of water, and a solid precipitate was collected. Acetone was added to the collected solid in such a manner that the total weight became 5 g, and the mixture was heated to 50°C to dissolve the solid. The solution was again added to a beaker containing 100 g of water to cause precipitation of the copolymer, and a solid was collected and dried in a reduced pressure atmosphere to obtain the acetylated copolymer. The number average molecular weight (Mn), $Log_{10}$(Mn), U1/R1, and U2/R2 of the copolymer obtained by acetylating the obtained vinyl alcohol copolymer were measured using a gel permeation chromatography apparatus.

Here,

U1 represents a peak intensity value in a chromatogram obtained from a UV absorption detector at a molecular weight MU1 defined by the following formula when Mn is calculated from a chromatogram obtained from a refractive index detector in gel permeation chromatography measurement performed on the copolymer obtained by acetylating the vinyl alcohol copolymer.

$$Log_{10}MU1 = Log_{10}(Mn)+0.5$$

R1 represents a peak intensity value in the chromatogram obtained from the refractive index detector at a molecular weight MR1 defined by the following formula when Mn is calculated from the chromatogram obtained from the refractive index detector in the gel permeation chromatography measurement performed on the copolymer obtained by acetylating the vinyl alcohol copolymer.

$$Log_{10}MR1 = Log_{10}(Mn)+0.5$$

U2 represents a peak intensity value in the chromatogram obtained from the UV absorption detector at a molecular weight MU2 defined by the following formula when Mn is calculated from the chromatogram obtained from the refractive index detector in the gel permeation chromatography measurement performed on the copolymer obtained by acetylating the vinyl alcohol copolymer.

$$Log_{10}MU2 = Log_{10}(Mn)-0.5$$

R2 represents a peak intensity value in the chromatogram obtained from the refractive index detector at a molecular weight MR2 defined by the following formula when Mn is calculated from the chromatogram obtained from the refractive index detector in the gel permeation chromatography measurement performed on the copolymer obtained by acetylating the vinyl alcohol copolymer.

$$Log_{10}MR2 = Log_{10}(Mn)-0.5$$

And, Mn represents the number average molecular weight of the copolymer obtained by acetylating the vinyl alcohol copolymer, which is calculated from the chromatogram obtained from the refractive index detector.

Measurement conditions were as follows.

Column: one Shodex "KF-G (4.6 mm × 10 mm)" and two Shodex "KF-806M (4.6 mm × 300 mm)" connected in series
Standard samples: polymethyl methacrylate (Agilent EasiVial GPC/SEC Calibration Standards Part Number PL2020-0203), Mp 2,210,000, 1,020,000, 538,500, 265,000, 146,500, 72,000, 26,500, 13,900, 7,290, 1,840, 885, 550
Solvent and mobile phase: tetrahydrofuran (not containing stabilizer), purity: 99.8% (201-20073 manufactured by FUJIFILM Wako Pure Chemical Corporation)
Flow rate: 1.0 mL/min
Temperature: 40°C
Measurement time: 40 minutes
Sample solution concentration: 0.17 mass/volume% (tetrahydrofuran (not containing stabilizer) solution) (filtered with a filter having an opening diameter of 0.45 pm)
Injection amount: 100 pL
UV absorption detector: SPD-20A manufactured by SHIMADZU CORPORATION
Refractive index detector: Shodex RI-501
Degasser: Shodex ERC-3215a
Liquid feeding pump: LC-20AD manufactured by SHIMADZU CORPORATION
Autosampler: LC-20A HT manufactured by SHIMADZU CORPORATION
Column oven: CTO-20 manufactured by SHIMADZU CORPORATION

Degree of Saponification

The content of each constituent unit was calculated from the measurement result of $^1$H-NMR of the copolymer, and the degree of saponification (DS) of the polymer was obtained using the following formula ($S_1$).
[Formula 2]

$$DS = \frac{D}{E} \times 100 \qquad (S_2)$$

In the formula ($S_1$), D represents the number of moles of hydroxyl groups included in the vinyl alcohol copolymer and E represents a sum of the number of moles of hydroxyl groups included in the vinyl alcohol copolymer and the number of moles of ester groups included in the vinyl alcohol copolymer.

Heat-Sealing Properties

An aqueous solution of each of the vinyl alcohol copolymers obtained in Examples and Comparative Examples having a concentration of 10 mass% was prepared, and foreign matter and bubbles were removed through filtration and centrifugal separation. When the polymer did not dissolve in water, the polymer was dissolved in a mixed solution to which 2-propanol was added until the polymer dissolved in the solution (the concentration of the polymer was 10 mass%). The aqueous solution was poured onto a PET film, and dried in an atmosphere at 23°C and 50% RH for one week to obtain a film with a thickness of about 100 $\mu$m. The moisture content of this film was adjusted under conditions of 20°C and 60% RH. Next, two films subjected to moisture content adjustment as described above were each cut to a size of 1.5 cm $\times$ 5.0 cm, and were superposed on each other in such a manner that layers of the vinyl alcohol copolymer came into contact with each other, and a portion of the superposed films was subjected to heat-sealing at various temperatures in an environment at 23°C and 50% RH with use of a heat-sealing machine ("heating-temperature-controlled automatic sealer OPL-200-10" manufactured by FUJIIMPULSE CO., LTD.) under conditions of an upper pressing part (10 mm), a lower pressing part (10 mm), a pressing force of about 0.6 MPa, and 1 second. Thereafter, a breaking strength or a peel strength of the obtained heat-sealed portion was measured with a width of 15 mm in a T-peel test (180° peel test) at a test speed of 300 mm/min.

Tensile Strength

An aqueous solution of each of the vinyl alcohol copolymers obtained in Examples and Comparative Examples having a concentration of 10 mass% was prepared, and foreign matter and bubbles were removed through filtration and centrifugal separation. When the copolymer did not dissolve in water, the copolymer was dissolved in a mixed solution to which 2-propanol was added until the copolymer dissolved in the solution (the concentration of the dissolved polymer was 10 mass%). The aqueous solution was poured onto a PET film, and dried in an atmosphere at 23°C and 50% RH for one week to obtain a film with a thickness of about 100 $\mu$m. The moisture content of this film was adjusted at 20°C and 40% RH for one week, and a stress at the maximum point was measured under the following conditions.

Apparatus: Autograph AG-X plus (manufactured by SHIMADZU CORPORATION)
Distance between chucks: 70 mm
Tension rate: 500 mm/min
Sample shape: dumbbell shape (width: 10 mm, thickness: about 0.1 mm)
Test environment: 23°C, 50% RH

Note that, when the tensile strength is 5 kgf/mm$^2$ or more, sufficient strength required in practical uses can be ensured.

Enthalpy of Crystal Fusion, Glass Transition Temperature, and Melting Point

The enthalpy of crystal fusion, the glass transition temperature, and the melting point were measured under the following conditions.

Apparatus: differential scanning calorimeter (DSC25 manufactured by TA instruments)
Temperature profile: The temperature was increased from room temperature to 250°C, then reduced to -30°C, and again increased to 250°C. The enthalpy of crystal fusion, the glass transition temperature, and the melting point were measured from the temperature profile of the last temperature increase.
Temperature increasing and reducing rate: 10°C/min
Sample amount: about 3 mg (an aluminum pan was used)

Example 1: Production of Vinyl Alcohol Copolymer

In the Examples, the term "pressure" refers to a gauge pressure unless otherwise specified.

500 g of vinyl acetate and 150 g of methanol were placed in a 1.4 L pressurizable reaction chamber equipped with a stirrer, a nitrogen inlet port, a propylene inlet port, an initiator addition port, and a solution feeding port, and nitrogen purging was performed in the reaction chamber by performing nitrogen bubbling for 30 minutes. An initiator solution was prepared separately by dissolving 2.0 g of 2,2-azobis(isobutyronitrile) (AIBN), which was used as a radial polymerization initiator, in 56 g of methanol, and nitrogen purging was performed by performing bubbling using nitrogen gas.

Next, propylene was introduced into the above-described pressurizable reaction chamber until the pressure inside the reaction chamber reached 0.500 MPa. After propylene was introduced, gas was discharged from the reaction chamber for 30 minutes until the pressure inside the reaction chamber decreased to 0.100 MPa. This operation of introducing propylene and then discharging gas was performed three times in total to replace the atmosphere within the reaction chamber with propylene. After the temperature inside the reaction chamber was increased to 60°C from the state where the pressure was 0.100 MPa, propylene was introduced until the pressure inside the reaction chamber reached 0.700 MPa. The above-described initiator solution was added at a rate of 15 mL/min in the state where the temperature inside the reaction chamber was 60°C and the pressure inside the reaction chamber was 0.700 MPa. Then, polymerization was caused to progress while keeping the temperature inside the reaction chamber at 60°C and gradually reducing the pressure inside the reaction chamber at a rate of $8.01 \times 10^5$ MPa/min. When 337 minutes elapsed from the start of the addition of the initiator solution and the pressure inside the reaction chamber reached 0.673 MPa and a vinyl acetate consumption rate reached 26.8%, a polymerization inhibitor solution (a mixed solution of 4 g of 2,2,6,6-tetramethylpiperidine 1-oxyl free radical and 10 g of methanol) was added to stop the polymerization.

After the pressurizable reaction chamber was opened to remove propylene, bubbling was performed using nitrogen gas to completely remove propylene. Next, unreacted vinyl acetate monomer was removed in a reduced pressure atmosphere to obtain a methanol solution of a modified vinyl acetate copolymer (hereinafter also referred to as "modified PVAc"). Next, 86.1 parts by mass of a sodium hydroxide methanol solution (sodium hydroxide concentration: 16.2 mass%) was added to 1000 parts by mass of a modified PVAc methanol solution (modified PVAc concentration: 14.4 mass%) prepared by adding methanol to the above-described methanol solution of the modified PVAc, and saponification was performed at 40°C for 15 minutes and at 60°C for 2 hours. After the solution was neutralized with acetic acid, completion of the neutralization was confirmed using a phenolphthalein indicator, and drying was performed at room temperature to obtain a resin. The resin was pulverized, and then washed five times using 720 parts by mass of 2-propanol, and dried in a reduced pressure atmosphere at 40°C for 3 days to obtain a copolymer. A gel that was formed by the system when about 1 minute elapsed from the addition of an alkali was pulverized using a pulverizer, and left to stand at 40°C for 1 hour to cause saponification to progress, and then remaining alkali was neutralized by adding 1000 g of methyl acetate. After completion of the neutralization was confirmed using a phenolphthalein indicator, a mixed solvent of 900 g of methanol and 100 g of water was added to the saponified product obtained through filtration, which was a white solid, the solution was left to stand at room temperature for 3 hours to wash the product. After the above-described washing operation was repeated three times, the saponified product obtained through centrifugal drying was left to stand in a drier at 70°C for 2 days to obtain a dried vinyl alcohol copolymer. The materials and conditions adopted are shown in Tables 1 and 2, and evaluation results are shown in Tables 3 and 4.

Examples 2 to 14, Comparative Examples 1 to 6, and Reference Examples 1 and 2: Production of Vinyl Alcohol Copolymers

Vinyl alcohol copolymers were produced in the same manner as in Example 1, except that the materials and reaction conditions adopted in Example 1 were changed as shown in Tables 1 and 2. Evaluation results are shown in Tables 3 and 4.

In Example 6, DAMP (1,3-diacetoxy-2-methylenepropane) was added as a comonomer in an initial addition amount shown in Table 1 at the same time as vinyl acetate. An addition amount of the comonomer was gradually added as a methanol solution from immediately after the addition of the polymerization initiator to immediately before the addition of the inhibitor.

In Comparative Examples 3 and 4, after nitrogen purging was performed by performing bubbling using nitrogen gas, polymerization was started by adding the initiator solution without an olefin being introduced (Table 1). The polymerization was performed under atmospheric pressure.

In Example 7 and Comparative Example 4, the amount of the sodium hydroxide methanol solution was changed to 2.3 parts by weight.

In Examples 12 to 14 and Comparative Examples 5 and 6, 2-methylpropylene was used as an olefin as shown in Table 1, and copolymers were synthesized under the conditions shown in Table 1 and evaluated.

Reference Examples 1 and 2

Copolymers were synthesized under the conditions shown in Table 1 by using ethylene as an olefin as shown in Table 1 and evaluated.

[Table 1]

| | Vinyl Acetate Addition [g] | Methanol Addition [g] | Initiator Solution | | | Comonomer | | | | Gas type |
| --- | --- | --- | --- | --- | --- | --- | --- | --- | --- | --- |
| | | | AIBN [g] | Methanol [g] | Addition Rate [mL/min] | Monomer type | Initial Addirion [g] | Additional Quantity [mL] | Additional Liquid Concentration [% by mass] | |
| Example 1 | 500 | 150 | 2.0 | 56 | 15 | - | - | - | - | Propylene |
| Example 2 | 500 | 150 | 2.0 | 56 | 15 | - | - | - | - | Propylene |
| Example 3 | 500 | 150 | 2.0 | 56 | 15 | - | - | - | - | Propylene |
| Example 4 | 400 | 380 | 2.0 | 50 | 15 | - | - | - | - | Propylene |
| Example 5 | 400 | 380 | 2.0 | 50 | 15 | - | - | - | - | Propylene |
| Example 6 | 400 | 358 | 2.0 | 50 | 20 | DAMP | 15 | 64 | 20 | Propylene |
| Example 7 | 500 | 150 | 2.0 | 56 | 15 | - | - | - | - | Propylene |
| Example 8 | 500 | 156 | 2.0 | 50 | 15 | - | - | - | - | Propylene |
| Example 9 | 500 | 81 | 4.0 | 80 | 15 | - | - | - | - | Propylene |
| Example 10 | 500 | 81 | 4.0 | 80 | 15 | - | - | - | - | Propylene |
| Example 11 | 400 | 380 | 2.0 | 50 | 15 | - | - | - | - | Propylene |
| Example 12 | 400 | 403 | 1.5 | 30 | 15 | - | - | - | - | 2-methylpropylene |
| Example 13 | 400 | 422 | 1.5 | 30 | 15 | - | - | - | - | 2-metyhylpropylene |
| Example 14 | 400 | 422 | 1.5 | 30 | 15 | - | - | - | - | 2-methylpropylene |
| Comparative Example 1 | 500 | 150 | 2.0 | 56 | 15 | - | - | - | - | Propylene |
| Comparative Example 2 | 400 | 380 | 2.0 | 50 | 15 | - | - | - | - | Propylene |
| Cpmparative Example 3 | 400 | 767 | 0.8 | 40 | 15 | - | - | - | - | None |

(continued)

| | Vinyl Acetate Addition [g] | Methanol Addition [g] | Initiator Solution | | | Comonomer | | | | Gas type |
|---|---|---|---|---|---|---|---|---|---|---|
| | | | AIBN [g] | Methanol [g] | Addition Rate [mL/min] | Monomer type | Initial Addition [g] | Additional Quantity [mL] | Additional Liquid Concentration [% by mass] | |
| Comparative Example a | 400 | 767 | 0.8 | 40 | 15 | - | - | - | - | None |
| Comparative Example 5 | 400 | 403 | 1.5 | 30 | 15 | - | - | - | - | 2-methylpropylene |
| Comparative Example 6 | 400 | 422 | 1.5 | 30 | 15 | - | - | - | - | 2-methylpropylene |
| Reference Example 1 | 250 | 487 | 0.5 | 20 | 15 | - | - | - | - | Ethylene |
| Reference Example 2 | 250 | 487 | 0.5 | 20 | 15 | - | - | - | - | Ethylene |

DAMP:1.3.diacetoxy-2-methylenepropane

[Table 2]

| | | Pressure | | | Polymerization Time [min] | Vinyl Acetate Consumption Rate [% by mass] |
|---|---|---|---|---|---|---|
| | | On Addition of Initiator Solution [MPa] | On Attision of Polymerization inhibitor Solution (MPa) | Pressure Change Rate [10⁻⁵MPa/min] | | |
| | Example 1 | 0.698 | 0.682 | -4.7 | 337 | 27.2 |
| | Example 2 | 0.700 | 0.673 | -8.0 | 337 | 26.8 |
| | Example 3 | 0.730 | 0.631 | -29.4 | 337 | 26.7 |
| | Example 4 | 0.499 | 0.400 | -29.3 | 338 | 36.0 |
| | Example 5 | 0.265 | 0.231 | -15.5 | 220 | 39.2 |
| | Example 6 | 0.458 | 0.427 | -8.2 | 377 | 28.4 |
| | Example 7 | 0.700 | 0.673 | -8.0 | 337 | 26.8 |
| | Example 8 | 0.700 | 0.738 | 10.9 | 348 | 27.0 |
| | Example 9 | 0.724 | 0.824 | 15.5 | 646 | 59.3 |
| | Example 10 | 0.680 | 0.881 | 58.3 | 345 | 59.3 |
| | Example 11 | 0.210 | 0.221 | 5.8 | 191 | 43.6 |
| | Example 12 | 0.140 | 0.130 | -5.3 | 188 | 37.0 |
| | Example 13 | 0.106 | 0.061 | -7.6 | 328 | 41.3 |
| | Example 14 | 0.180 | 0.158 | -6.5 | 260 | 27.1 |
| | Comparative Example 1 | 0.680 | 0.680 | 0 | 337 | 27.2 |
| | Comparative Example 2 | 0.250 | 0.250 | 0 | 220 | 39.2 |
| | Comparative Example 3 | - | - | - | 242 | 41.5 |
| | Comparative Example 4 | - | - | - | 242 | 41.5 |
| | Comparative Example 5 | 0.135 | 0.135 | 0 | 186 | 36.9 |
| | Comparative Example 6 | 0.170 | 0.170 | 0 | 266 | 27.3 |
| | Reference Example 1 | 0.361 | 0.361 | 0 | 131 | 38.2 |
| | Reference Example 2 | 0.382 | 0.335 | -35.9 | 131 | 37.8 |

[Table 3]

| | Modified Group of Olefin Unit | Content of Olefin Unit | Content of Vinyl Alcohol Unit | Content of Vinyl Acetate Units | Degree of Saponification | Content of Comonomer | Melting Point | Lowest Heat-Sealing Temperature | (Melting Point)-(Lowest Heat-Sealing Temperature) | Distribution | | | |
|---|---|---|---|---|---|---|---|---|---|---|---|---|---|
| | | [mol%] | [mol%] | [mol%] | [mol%] | [mol%] | [°C] | [°C](Strength 5[N /15mm] or more) | [°C] | $\log_{10}$ (Mn) | U1/R1 | U2/R2 | [U1/R1]/ [U2/R2] |
| Example 1 | Propylene | 157 | 84 3 | 0 | 100 | 0 | 156 | 100 | 56 | 4.638 | 2.327 | 2.285 | 1.018 |
| Example 2 | Propylene | 15.8 | 84.2 | 0 | 100 | 0 | 154 | 100 | 54 | 4.652 | 2.360 | 2.200 | 1.073 |
| Example 3 | Propylene | 162 | 83.8 | 0 | 100 | 0 | 153 | 80 | 73 | 4.651 | 2.570 | 1 _958 | 1.313 |
| Example 4 | Propylene | 12.5 | 87.3 | 0.1 | 99.9 | 0 | 173 | 100 | 73 | 4.669 | 2.278 | 2.252 | 1.012 |
| Example 5 | Propylene | 74 | 92.5 | 0.1 | 99.9 | 0 | 197 | 140 | 57 | 4.727 | 2.750 | 2.520 | 1.091 |
| Example 6 | Propylene | 14.5 | 81.0 | 0.2 | 99.8 | 4.4 | 143 | 80 | 63 | 4.738 | 2.326 | 2.296 | 1.013 |
| Example 7 | Propylene | 15.8 | 74.6 | 9.6 | 88.6 | 0 | 143 | 80 | 63 | 4.662 | 2.340 | 2.220 | 1.054 |
| Example 8 | Propylene | 16.6 | 83.4 | 0 | 100 | 0 | 146 | 80 | 66 | 4.732 | 2.410 | 2.670 | 0.903 |
| Example 9 | Propylene | 15.9 | 84.1 | 0 | 100 | 0 | 141 | 80 | 61 | 4.614 | 2.360 | 2.520 | 0.937 |
| Example 10 | Propylene | 16.3 | 83.5 | 0.2 | 99.8 | 0 | 140 | 80 | 60 | 4.704 | 2.141 | 2.876 | 0.744 |
| Example 11 | Propylene | 6.2 | 93.8 | 0 | 100 | 0 | 188 | 100 | 88 | 4.720 | 2.509 | 2.690 | 0.965 |
| Example 12 | 2-methylpropylene | 4.1 | 95.7 | 0.2 | 99.8 | 0 | 211 | 140 | 71 | 4.641 | 2.324 | 2.274 | 1.022 |
| Example 13 | 2-methylpropylene | 8.0 | 91.3 | 0.6 | 99.3 | 0 | 191 | 120 | 71 | 4.653 | 2.347 | 2201 | 1.068 |
| Example 14 | 2-metylpropylene | 12.0 | 87.9 | 0.2 | 99.6 | 0 | 155 | 100 | 55 | 4.681 | 2.425 | 2.147 | 1.129 |
| Comparative Example 1 | Propylene | 15.9 | 84,1 | 0 | 100 | 0 | 160 | 120 | 40 | 4.620 | 2.380 | 2.400 | 0.992 |
| Comparative Example 2 | Propylene | 6.8 | 93.1 | 0.1 | 99.9 | 0 | 204 | 160 | 44 | 4.727 | 2.510 | 2.493 | 1.007 |
| Comparative Example 3 | - | 0 | 98.5 | 1.5 | 98.5 | 0 | 232 | 190 | 42 | - | - | - | - |

(continued)

| | Modified Group of Olefin Unit | Content of Olefin Unit | Content of Vinyl Alcohol Unit | Content of Vinyl Acetate Units | Degree of Saponification | Content of Comonomer | Melting Point | Lowest Heat-Sealing Temperature | (Melting Point)-(Lowest Heat-Sealing Temperature) | Distribution | | | |
|---|---|---|---|---|---|---|---|---|---|---|---|---|---|
| | | [mol%] | [mol%] | [mol%] | [mol%] | [mol%] | [°C] | [°C](Strength 5[N /15mm] or more) | [°C] | $Log_{10}$ (Mn) | U1/R1 | U2/R2 | [U1/R1]/ [U2/R2] |
| Comparative Example 4 | - | 0 | 88.2 | 11.8 | 88.2 | 0 | 195 | 170 | 25 | - | - | - | - |
| Comparative Example 5 | 2-methylpropylene | 42 | 955 | 0.3 | 99.7 | 0 | 212 | 160 | 52 | 4.684 | 2.355 | 2.338 | 1.007 |
| Comparative Example 6 | 2-methylpropylene | 12.3 | 67.5 | 0.2 | 99.8 | 0 | 150 | 120 | 38 | 4.689 | 2.419 | 2.407 | 1.005 |
| Reference Example 1 | Ethylene | 8.0 | 920 | 0 | 100 | 0 | 215 | 190 | 25 | 4.492 | 2.620 | 2.400 | 1.092 |
| Reference Example 2 | Ethylene | 8.1 | 91.9 | 0 | 100 | 0 | 219 | 190 | 29 | 4.495 | 2.790 | 2.540 | 1.098 |

[Table 4]

| | Modified Group of Olefin Unit | Content of Olefin Unit | Content of Vinyl Alcohol Unit | Heat-Sealing Strength [N/15mm] | | | | | | | | Tensile Strength | Enthalpy of Crystal Fusion | Glass Transition Temperature |
|---|---|---|---|---|---|---|---|---|---|---|---|---|---|---|
| | | [mol%] | [mol%] | 80°C | 90°C | 100°C | 120°C | 140°C | 160°C | 170°C | 190°C | [kgf/mn$^2$] (40%RH) | [J/g] | [°C] |
| Example 1 | Propylene | 15.7 | 84.3 | - | 0.2 | 6.8 | 26.4 | 30.2 | 29.8 | - | - | 12.50 | 18.5 | 76.5 |
| Example 2 | Propylene | 15.0 | 84.2 | - | 0.6 | 27.5 | 20.0 | 339 | 30.2 | - | - | 12.77 | 17.9 | 75.3 |
| Example 3 | Propylene | 16.2 | 83.8 | 154 | 24.0 | 26.1 | 26.2 | 26.0 | 25.4 | - | - | 12.10 | 16.8 | 74.4 |
| Example 4 | Propylene | 12.5 | 87.3 | - | - | 5.1 | 31.7 | 31.4 | 39.5 | - | - | 12.29 | 24.1 | 78.3 |
| Example 5 | Propylene | 7.4 | 92.5 | - | - | No Adhesion | 3.0 | 33.9 | 35.0 | - | - | 13.37 | 28.5 | 81.0 |
| Example 6 | Propylene | 14.5 | 81.0 | 20.8 | 24.8 | 29.6 | 25.6 | 25.8 | 25.8 | - | - | 12.53 | 15.5 | 719 |
| Example 7 | Propylene | 15.8 | 74.6 | 22.5 | 25.7 | 26.3 | - | - | - | - | - | 9.83 | 12.0 | 88.3 |
| Example 8 | Propylene | 16.6 | 83.4 | 20.0 | 25.4 | 26.6 | - | - | - | - | - | 10.51 | 21.4 | 74.1 |
| Example 9 | Propylene | 15.9 | 84.1 | 23.2 | 18.3 | 23.7 | - | - | - | - | - | 11.63 | 9.0 | 69.9 |
| Example 10 | Propylene | 16.3 | 83.5 | 25.8 | 23.6 | 24.8 | - | - | - | - | - | 10.10 | 8.3 | 65.6 |
| Example 11 | Propylene | 6.2 | 93.6 | - | - | 13.8 | 21.4 | 27.5 | - | - | - | 5.82 | 26.9 | 68.4 |
| Example 12 | 2-methylpropylene | 4.1 | 95.7 | - | - | - | 2.1 | 33.5 | 35.7 | - | - | 12.10 | 55.2 | 80.9 |
| Example 13 | 2-methylpropylene | 8.0 | 91.3 | - | - | 4.8 | 31.8 | 31.6 | 32.8 | - | - | 12.50 | 25_5 | 76.9 |
| Example 14 | 2-methylpropylene | 12.0 | 87_9 | - | 0.5 | 25_8 | 27.8 | 28.6 | 28.7 | - | - | 10.80 | 19.2 | 77.1 |
| Comparative Example 1 | Propylene | 15.9 | 84.1 | - | 0.4 | 3.3 | 26.2 | 33.1 | 29.1 | - | - | 11.85 | 193 | 77.2 |
| Comparative Example 2 | Propylene | 6.8 | 93.1 | - | - | No Adhesion | 2.1 | 3.5 | 33.0 | - | - | 10.21 | 29.8 | 81.7 |
| Cpmparative Example 3 | - | 0 | 98.5 | - | - | - | - | 0.2 | 0.4 | 1.2 | 6.8 | 13.15 | 95.7 | 81.0 |

| | Modified Group of Olefin Unit | Content of Olefin Unit | Content of Vinyl Alcohol Unit | Heat-Sealing Strength [N/15mm] | | | | | | | | Tensile Strength | Enthalpy of Crystal Fusion | Glass Transition Temperature |
|---|---|---|---|---|---|---|---|---|---|---|---|---|---|---|
| | | [mol%] | [mol%] | 80°C | 90°C | 100°C | 120°C | 140°C | 160°C | 170°C | 190°C | [kgf/mn$^2$] (40%RH) | [J/g] | [°C] |
| Comparative Example 4 | - | 0 | 88.2 | - | - | - | - | 0.7 | 3.2 | 29.0 | 28.4 | 11.60 | 28.9 | 70.4 |
| Comparative Example 5 | 2-methylpropylene | 4.2 | 95.5 | - | - | - | 0.5 | 2.B | 29.7 | - | - | 9.22 | 57.6 | 61.0 |
| Comparative Example 6 | 2-methylpropylene | 12.3 | 87.5 | - | No Adhesion | 4.2 | 23.4 | 27.1 | 27.9 | - | - | 8.97 | 20.1 | 77.5 |
| Reference Example 1 | Ethylene | 8.0 | 92.0 | - | - | - | - | 0.4 | 4.0 | 4.3 | 19.0 | 10.94 | 79.0 | 73.9 |
| Reference Example 2 | Ethylene | 8.1 | 91.9 | - | - | - | - | 0.6 | 3.9 | 4.1 | 18.9 | 9.90 | 67.6 | 74.9 |

EP 4 458 873 A1

As shown in Tables 3 and 4, the lowest temperature at which heat-sealing could be performed was lower in cases where the copolymers were obtained by performing polymerization while reducing the pressure of the olefin than in cases where the copolymers were obtained by performing polymerization while keeping the pressure of the olefin constant (compare Examples 1 to 3 and Comparative Example 1, and compare Example 5 and Comparative Example 2, for example). Also, temperatures at which heat-sealing could be performed were further reduced in cases where the copolymers were obtained by performing polymerization while increasing the pressure of the olefin, compared with the cases where the copolymers were obtained by performing polymerization while keeping the pressure of the olefin constant (compare Examples 8 to 10 and Comparative Example 1, and compare Example 11 and Comparative Example 2, for example). Note that there was a tendency that the copolymers obtained by performing polymerization while reducing the pressure of the olefin had more excellent tensile strength than the copolymers obtained by performing polymerization while keeping the pressure of the olefin constant (compare Examples 1 to 3 and Comparative Example 1, and compare Example 5 and Comparative Example 2, for example). When ethylene was used as the olefin, the lowest temperature at which heat-sealing could be performed did not change between a copolymer obtained by performing polymerization while reducing the pressure of the olefin and a copolymer obtained by performing polymerization while keeping the pressure of the olefin constant (compare Reference Examples 1 and 2).

Also, as shown in Tables 3 and 4, temperatures at which heat-sealing could be performed were lower in cases where 2-methylpropylene was used as the olefin than in cases where propylene was used as the olefin (compare Examples 5 and 13 in which the contents of the olefin units were equivalent, and compare Examples 4 and 14, for example).

Industrial Applicability

The resin composition according to the present invention is useful in technical fields such as the food and beverage field, the pet food field, the oil and fat industry field, the pharmaceutical field, and the electric and electronic field.

**Claims**

1. A vinyl alcohol copolymer comprising a vinyl alcohol constituent unit and an olefin constituent unit having 3 to 30 carbon atoms, the vinyl alcohol copolymer satisfying at least one of

   a difference between a melting point and a lowest heat-sealing temperature is 45°C or more; and
   the lowest heat-sealing temperature is 80°C or less, and
   the vinyl alcohol copolymer also satisfying the following formula:

$$\{U1/R1\}/\{U2/R2\} \le 0.990$$

   or

$$1.010 \le \{U1/R1\}/\{U2/R2\}$$

   where
   U1 represents a peak intensity value in a chromatogram obtained from a UV absorption detector at a molecular weight MU1 defined by the following formula when Mn is calculated from a chromatogram obtained from a refractive index detector in gel permeation chromatography measurement performed on a copolymer obtained by acetylating the vinyl alcohol copolymer,

$$\mathrm{Log}_{10}MU1 = \mathrm{Log}_{10}(Mn)+0.5$$

   R1 represents a peak intensity value in the chromatogram obtained from the refractive index detector at a molecular weight MR1 defined by the following formula when Mn is calculated from the chromatogram obtained from the refractive index detector in the gel permeation chromatography measurement performed on the copolymer obtained by acetylating the vinyl alcohol copolymer,

$$\mathrm{Log}_{10}MR1 = \mathrm{Log}_{10}(Mn)+0.5$$

U2 represents a peak intensity value in the chromatogram obtained from the UV absorption detector at a molecular weight MU2 defined by the following formula when Mn is calculated from the chromatogram obtained from the refractive index detector in the gel permeation chromatography measurement performed on the copolymer obtained by acetylating the vinyl alcohol copolymer,

$$Log_{10}MU2 = Log_{10}(Mn)\text{-}0.5$$

R2 represents a peak intensity value in the chromatogram obtained from the refractive index detector at a molecular weight MR2 defined by the following formula when Mn is calculated from the chromatogram obtained from the refractive index detector in the gel permeation chromatography measurement performed on the copolymer obtained by acetylating the vinyl alcohol copolymer,

$$Log_{10}MR2 = Log_{10}(Mn)\text{-}0.5,$$

and

Mn represents a number average molecular weight of the copolymer obtained by acetylating the vinyl alcohol copolymer, which is calculated from the chromatogram obtained from the refractive index detector.

2. The vinyl alcohol copolymer according to claim 1, wherein the olefin constituent unit has 3 to 9 carbon atoms.

3. The vinyl alcohol copolymer according to claim 2, wherein the olefin constituent unit is at least one constituent unit selected from the group consisting of a propylene unit, a 1-butene unit, a cis-2-butene unit, a trans-2-butene unit, a 2-methylpropylene unit, a 1-pentene unit, a cis-2-pentene unit, a trans-2-pentene unit, a 2-methyl-1-butene unit, a 2-methyl-2-butene unit, a 3-methyl-1-butene unit, a 1-hexene unit, a 1-heptene unit, a 1-octene unit, a 1-nonene unit, a 2-methyl-1-octene unit, and a 7-methyl-1-octene unit.

4. The vinyl alcohol copolymer according to claim 3, wherein the olefin constituent unit is at least one constituent unit selected from the group consisting of a propylene unit, a 1-butene unit, a cis-2-butene unit, a trans-2-butene unit, and a 2-methylpropylene unit.

5. The vinyl alcohol copolymer according to claim 4, wherein the olefin constituent unit is a propylene unit.

6. The vinyl alcohol copolymer according to claim 4, wherein the olefin constituent unit is a 2-methylpropylene unit.

7. The vinyl alcohol copolymer according to any one of claims 1 to 6, wherein a content of the olefin constituent unit is 0.1 to 60 mol%.

8. The vinyl alcohol copolymer according to any one of claims 1 to 7, wherein the number average molecular weight (Mn) of the copolymer obtained by acetylating the vinyl alcohol copolymer is 400 to 200000.

9. The vinyl alcohol copolymer according to any one of claims 1 to 8, wherein the vinyl alcohol polymer has a degree of saponification of 50 to 100 mol%.

10. The vinyl alcohol copolymer according to any one of claims 1 to 9, wherein a content of the vinyl alcohol constituent unit is 75 to 99 mol%.

11. The vinyl alcohol copolymer according to any one of claims 1 to 10, further comprising a constituent unit containing a hydroxyl group, other than the vinyl alcohol constituent unit.

12. The vinyl alcohol copolymer according to any one of claims 1 to 11, further comprising an ethylene constituent unit.

13. A resin composition comprising the vinyl alcohol copolymer according to any one of claims 1 to 12.

14. The resin composition according to claim 13, further comprising at least one polymer selected from the group consisting of a polyvinyl alcohol having a degree of saponification of 40 to 100%, a modified polyvinyl alcohol having a degree of saponification of 40 to 100%, an ethylene-vinyl alcohol copolymer having a degree of saponification of 40 to 100%, a polyvinyl butyral having a degree of saponification of 40 to 100%, starch, a starch derivative, cellulose, and a cellulose derivative.

**15.** A resin molded body comprising the resin composition according to claim 13 or 14.

**16.** The resin molded body according to claim 15, which is a film.

**17.** The resin molded body according to claim 15, which is a fiber.

**18.** The resin molded body according to claim 15, which is a gas barrier material.

**19.** The resin molded body according to claim 15, which is a polarizing film.

**20.** The resin molded body according to claim 15, which is a water-soluble substrate.

**21.** A method for manufacturing a vinyl alcohol copolymer including a vinyl alcohol constituent unit and an olefin constituent unit having 3 to 30 carbon atoms, and satisfying at least one of a difference between a melting point and a lowest heat-sealing temperature is 45°C or more; and the lowest heat-sealing temperature is 80°C or less, comprising:

obtaining a crude copolymer by polymerizing an olefin and vinyl acetate under conditions where a pressure of the olefin changes; and
saponifying the crude copolymer.

**22.** The method for manufacturing a vinyl alcohol copolymer according to claim 21, wherein an average change rate of the pressure of the olefin is $1.0 \times 10^{-5}$ Pa/min or more.

## INTERNATIONAL SEARCH REPORT

| International application No. |
| --- |
| **PCT/JP2022/047468** |

**A. CLASSIFICATION OF SUBJECT MATTER**

***C08F 216/06***(2006.01)i; ***C08F 8/12***(2006.01)i; ***C08F 210/00***(2006.01)i
FI: C08F216/06; C08F8/12; C08F210/00

According to International Patent Classification (IPC) or to both national classification and IPC

**B. FIELDS SEARCHED**

Minimum documentation searched (classification system followed by classification symbols)

C08F216/06; C08F8/12; C08F210/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 49-32657 B1 (NIPPON SYNTHETIC CHEM IND CO LTD) 02 September 1974 (1974-09-02)<br>claims, examples | 1-22 |
| A | WO 2006/011490 A1 (KURARAY CO., LTD.) 02 February 2006 (2006-02-02)<br>claims, examples | 1-22 |
| A | JP 2015-34262 A (KURARAY CO., LTD.) 19 February 2015 (2015-02-19)<br>claims, examples | 1-22 |
| A | JP 2002-53727 A (KURARAY CO., LTD.) 19 February 2002 (2002-02-19)<br>claims, examples | 1-22 |

☐ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **03 March 2023** | **14 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/047468**

| Patent document cited in search report | | | Publication date (day/month/year) | Patent family member(s) | | | Publication date (day/month/year) |
|---|---|---|---|---|---|---|---|
| JP | 49-32657 | B1 | 02 September 1974 | (Family: none) | | | |
| WO | 2006/011490 | A1 | 02 February 2006 | (Family: none) | | | |
| JP | 2015-34262 | A | 19 February 2015 | (Family: none) | | | |
| JP | 2002-53727 | A | 19 February 2002 | US | 2002/0037946 | A1 | |
| | | | | claims, examples | | | |
| | | | | EP | 1180536 | A1 | |
| | | | | KR | 10-2002-0012511 | A | |
| | | | | CN | 1337421 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4772175 B
- JP 49032657 A
- WO 2006011490 A